(19) **Europäisches Patentamt**
**European Patent Office**
**Office européen des brevets**

(11) **EP 3 054 638 B1**

(12) **FASCICULE DE BREVET EUROPEEN**

(45) Date de publication et mention
de la délivrance du brevet:
**22.08.2018 Bulletin 2018/34**

(51) Int Cl.:
***H04L 25/03*** *(2006.01)*

(21) Numéro de dépôt: **16153649.5**

(22) Date de dépôt: **01.02.2016**

(54) **METHODE D'EGALISATION POUR UN CANAL DE COMMUNICATION PARCIMONIEUX ET DISPOSITIF METTANT EN OEUVRE LE PROCEDE**

**ENTZERRUNGSVERFAHREN FÜR EINEN ZERSTREUTEN KOMMUNIKATIONSKANAL, UND VORRICHTUNG ZUR UMSETZUNG DIESES VERFAHRENS**

**EQUALISATION METHOD FOR SPARSITY-BASED COMMUNICATION CHANNEL AND DEVICE IMPLEMENTING THE METHOD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2015 FR 1500232**

(43) Date de publication de la demande:
**10.08.2016 Bulletin 2016/32**

(73) Titulaires:
- **THALES**
  **92400 Courbevoie (FR)**
- **Institut National Polytechnique de Toulouse (INPT)**
  **31029 Toulouse Cedex 4 (FR)**
- **Centre National de la Recherche Scientifique**
  **75016 Paris (FR)**

(72) Inventeurs:
- **RADDADI, Bilel**
  **31000 Toulouse (FR)**
- **GADAT, Benjamin**
  **31100 Toulouse (FR)**

- **POULLIAT, Charly**
  **31400 Toulouse (FR)**
- **THOMAS, Nathalie**
  **31180 Saint Genies Bellevue (FR)**
- **BOUCHERET, Marie-Laure**
  **31120 Goyrans (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**US-B1- 6 904 085**

- **FREDERICK K H LEE ET AL: "Parallel-Trellis Turbo Equalizers for Sparse-Coded Transmission over SISO and MIMO Sparse Multipath Channels", IEEE TRANSACTIONS ON WIRELESS COMMUNICATIONS, IEEE SERVICE CENTER, PISCATAWAY, NJ, US, vol. 5, no. 12, 1 décembre 2006 (2006-12-01), pages 3568-3578, XP011151696, ISSN: 1536-1276, DOI: 10.1109/TWC.2006.256979**

**Description**

Le domaine de l'invention est celui des communications numériques sans fil et plus particulièrement les communications à travers un canal de transmission dit parcimonieux qui désigne un canal qui peut être modélisé principalement par deux trajets retardés de plusieurs symboles et ayant des puissances différentes. Un tel modèle peut être appliqué notamment à une liaison de communication aéronautique, par exemple une liaison descendante entre un satellite et un aéronef.

L'invention porte plus précisément sur un procédé et un dispositif d'égalisation à faible complexité de mise en oeuvre qui est particulièrement adapté à un canal de transmission parcimonieux.

L'égalisation du signal reçu est une tâche importante pour un récepteur de signaux, en particulier lorsque le canal de propagation est perturbé par la présence de multi-trajets.

De nombreux algorithmes d'égalisation existent dans la littérature mais un inconvénient général de ces solutions est qu'elles engendrent le plus souvent une complexité d'implémentation importante d'autant plus que les performances de démodulation et décodage en réception souhaitées sont élevées.

Les techniques d'égalisation appliquées aux canaux de transmission parcimonieux ont été abordées dans différentes publications. Citons à titre d'exemple les références [1]-[4]. Les méthodes décrites sont le plus souvent basées sur l'implémentation d'un algorithme de détection basé sur plusieurs treillis parallèles, du type algorithme de Viterbi ou algorithme MAP (Maximum A Posteriori). Ces algorithmes présentent l'inconvénient d'une complexité de mise en oeuvre importante.

D'autre part, certaines méthodes (décrites par exemple dans les références [2], [3] et [5]) imposent un modèle de canal dans lequel les trajets secondaires sont de puissance nulle, ce qui relève d'une approximation qui n'est pas toujours réaliste.

Pour des modèles de canaux non approximés, les méthodes d'égalisation connues implémentent une fonction de suppression d'interférence qui nécessite une interdépendance entre les treillis parallèles ce qui peut entrainer une complexité accrue de mise en oeuvre. De telles méthodes sont notamment décrites dans les références [5]-[8] et dans le document « Parallel-Trellis turbo equalizers for sparse-coded transmission over SISO and MIMO sparse multipath channels, Frederick K H Lee et al, IEEE transactions on wireless communications » Ces méthodes présentent l'inconvénient supplémentaire qu'elles ne permettent pas une parallélisation et une indépendance totale des traitements exécutés sur les différents treillis du fait de leur interdépendance.

On connait par ailleurs la méthode d'égalisation décrite dans le brevet américain US 6904085.

La présente invention vise à remédier aux inconvénients des méthodes d'égalisation connues de l'art antérieur en proposant une méthode d'égalisation adaptée à un canal parcimonieux qui permet un fort degré de parallélisation dans les traitements mis en oeuvre.

L'invention a ainsi pour objet, dans un premier mode de réalisation, une méthode d'égalisation d'un signal comprenant une pluralité de symboles modulés, ledit signal étant transmis par un émetteur à travers un canal de transmission vers un récepteur, ladite méthode comprenant les étapes suivantes appliquées à un bloc de N symboles reçus :

-   Une première étape d'égalisation dudit bloc comprenant :

    i. Le démultiplexage des N symboles reçus d'un facteur L de sorte à générer un nombre L prédéterminé de sous-blocs de symboles comportant chacun une version sous-échantillonnée d'un facteur L dudit bloc de N symboles reçus,
    ii. L'égalisation indépendante de chaque sous-bloc à l'aide d'un algorithme d'égalisation identique,
    iii. Le multiplexage des symboles égalisés de chaque sous-bloc pour obtenir un bloc de N symboles égalisés,

-   Une étape de suppression d'interférences liées aux trajets autres que les deux trajets de plus forte puissance comprenant :

    i. La génération d'un terme d'interférence résultant de l'influence, sur lesdits symboles égalisés, de tous les trajets du canal de la réponse impulsionnelle du canal de transmission sauf les deux trajets de plus forte puissance,
    ii. La soustraction dudit terme d'interférence aux symboles du bloc de N symboles reçus,

-   Une seconde étape d'égalisation égale à une seconde itération de la première étape d'égalisation.

Selon un aspect particulier du premier mode de réalisation de l'invention, l'étape de suppression d'interférences et la seconde étape d'égalisation sont exécutées itérativement.

Selon un aspect particulier du premier mode de réalisation de l'invention, ledit algorithme d'égalisation est configuré pour opérer sur un treillis, chaque état du treillis représentant un symbole possible, chaque branche entre deux états consécutifs du treillis étant associée à un symbole modulé reçu.

Selon un aspect particulier du premier mode de réalisation de l'invention, ledit algorithme d'égalisation opérant sur un treillis comprend une première étape de parcours du treillis dans le sens progressif dans laquelle sont calculées, pour chaque section du treillis et pour chaque état courant de la section, une première probabilité d'occurrence dudit état connaissant les symboles possibles associés aux états antérieurs jusqu'à la section précédant l'état courant, un bloc de symboles égalisés étant déterminé comme la séquence d'états dans le treillis qui permet de maximiser lesdites premières probabilités.

Selon un aspect particulier du premier mode de réalisation de l'invention, ledit algorithme d'égalisation opérant sur un treillis comprend une seconde étape de parcours du treillis dans le sens rétroprogressif dans laquelle sont calculées, pour chaque section du treillis et pour chaque état courant de la section, une seconde probabilité d'occurrence d'une séquence de symboles possibles associés aux sections suivantes de ladite section sachant l'état courant, un bloc de symboles égalisés étant déterminé comme la séquence d'états dans le treillis qui permet de maximiser les produits entre ladite première probabilité et ladite seconde probabilité.

L'invention a également pour objet, dans un second mode de réalisation, une méthode d'égalisation d'un signal comprenant une pluralité de symboles modulés, ledit signal étant transmis par un émetteur à travers un canal de transmission vers un récepteur, ladite méthode comprenant les étapes suivantes appliquées à un bloc de N symboles reçus :

- Une première étape d'égalisation dudit bloc comprenant :

    i. Le démultiplexage des N symboles reçus d'un facteur L de sorte à générer un nombre L prédéterminé de sous-blocs de symboles comportant chacun une version sous-échantillonnée d'un facteur L dudit bloc de N symboles reçus,
    ii. L'égalisation indépendante de chaque sous-bloc à l'aide d'un algorithme d'égalisation opérant sur un treillis, chaque état du treillis représentant un symbole possible, chaque branche entre deux états consécutifs du treillis étant associée à un symbole modulé reçu, ledit algorithme d'égalisation comprenant une étape de parcours du treillis dans le sens progressif dans laquelle sont calculées, pour chaque section du treillis et pour chaque état courant de la section, une première probabilité d'occurrence dudit état connaissant les symboles possibles associés aux états antérieurs jusqu'à la section précédant l'état courant, un bloc de symboles égalisés étant déterminé comme la séquence d'états dans le treillis qui permet de maximiser lesdites premières probabilités.
    iii. Le multiplexage des symboles égalisés de chaque sous-bloc pour obtenir un bloc de N symboles égalisés,

- Une étape de suppression d'interférences liées aux trajets autres que les deux trajets de plus forte puissance comprenant :

    i. La génération d'un terme d'interférence résultant de l'influence, sur lesdits symboles égalisés, de tous les trajets du canal de la réponse impulsionnelle du canal de transmission sauf les deux trajets de plus forte puissance,
    ii. La soustraction dudit terme d'interférence aux symboles du bloc de N symboles reçus,

- Une seconde étape d'égalisation comprenant :

    i. Le démultiplexage du bloc de N symboles d'un facteur L de sorte à générer un nombre L prédéterminé de sous-blocs de symboles comportant chacun une version sous-échantillonnée d'un facteur L dudit bloc,
    ii. L'égalisation indépendante de chaque sous-bloc à l'aide d'un algorithme d'égalisation opérant sur un treillis, chaque état du treillis représentant un symbole possible, chaque branche entre deux états consécutifs du treillis étant associée à un symbole modulé reçu, ledit algorithme d'égalisation comprenant une étape de parcours du treillis dans le sens rétroprogressif dans laquelle sont calculées, pour chaque section du treillis et pour chaque état courant de la section, une seconde probabilité d'occurrence d'une séquence de symboles possibles associés aux sections suivantes de ladite section sachant l'état courant, un bloc de symboles égalisés étant déterminé comme la séquence d'états dans le treillis qui permet de maximiser les produits entre ladite première probabilité et ladite seconde probabilité.
    iii. Le multiplexage des symboles égalisés de chaque sous-bloc pour obtenir un bloc de N symboles égalisés.

Selon un aspect particulier du second mode de réalisation, la méthode selon l'invention comprend en outre au moins une itération de l'exécution successive de l'étape de suppression d'interférences et de la première étape d'égalisation.

Selon un aspect particulier du second mode de réalisation, la méthode selon l'invention comprend en outre au moins une itération de l'exécution successive d'une première occurrence de l'étape de suppression d'interférences, de la première étape d'égalisation, d'une seconde occurrence de l'étape de suppression d'interférences et de la seconde étape d'égalisation.

Selon un aspect particulier de l'invention, ledit algorithme d'égalisation est un algorithme MAP, par exemple un algorithme BCJR (Bahl, Cocke, Jelinek, Raviv).

Selon un aspect particulier de l'invention, le facteur L de démultiplexage est égal à la durée, exprimée en nombre entier de symboles, entre les deux trajets de plus forte puissance dans la réponse impulsionnelle du canal de transmission.

Selon un aspect particulier de l'invention, la génération du terme d'interférence est réalisée par la convolution du bloc de N symboles égalisés avec une estimée de la réponse impulsionnelle du canal de transmission dans laquelle les coefficients correspondants aux deux trajets de plus forte puissance sont mis à zéro.

L'invention a encore pour objet un programme d'ordinateur comportant des instructions pour l'exécution de la méthode d'égalisation d'un signal reçu selon l'invention, lorsque le programme est exécuté par un processeur, un support d'enregistrement lisible par un processeur sur lequel est enregistré un programme comportant des instructions pour l'exécution de la méthode d'égalisation d'un signal reçu selon l'invention, lorsque le programme est exécuté par un processeur, un dispositif d'égalisation d'un signal reçu comprenant des moyens configurés pour exécuter la méthode d'égalisation d'un signal reçu selon l'invention et un récepteur de signal comprenant un dispositif d'égalisation du signal reçu selon l'invention.

D'autres caractéristiques et avantages de la présente invention apparaîtront mieux à la lecture de la description qui suit en relation aux dessins annexés qui représentent :

- La figure 1, un synoptique d'un égaliseur selon l'invention dans un premier mode de réalisation,
- La figure 2, un diagramme illustrant une hypothèse de réponse impulsionnelle du canal de propagation,
- La figure 3, un schéma illustrant un parcours dans le sens progressif d'un treillis lors de la mise en oeuvre d'un algorithme d'égalisation du type BCJR,
- La figure 4, un schéma illustrant un parcours dans le sens rétroprogressif d'un treillis lors de la mise en oeuvre d'un algorithme d'égalisation du type BCJR,
- La figure 5, un synoptique d'un égaliseur selon l'invention dans un second mode de réalisation.

L'invention porte sur une méthode d'égalisation d'un signal reçu par un récepteur et un dispositif d'égalisation adapté à exécuter la méthode. Le signal est transmis par un émetteur à travers un canal de propagation soumis à l'influence de multi-trajets liés aux réflexions du signal sur différents éléments de l'environnement de transmission. Le signal est modulé à l'aide d'un schéma de modulation donné. Le signal reçu par le récepteur est échantillonné et traité pour fournir des symboles au rythme du modulateur. Les symboles échantillonnés doivent ensuite être égalisés pour supprimer les interférences liées à la réponse imparfaite du canal de transmission.

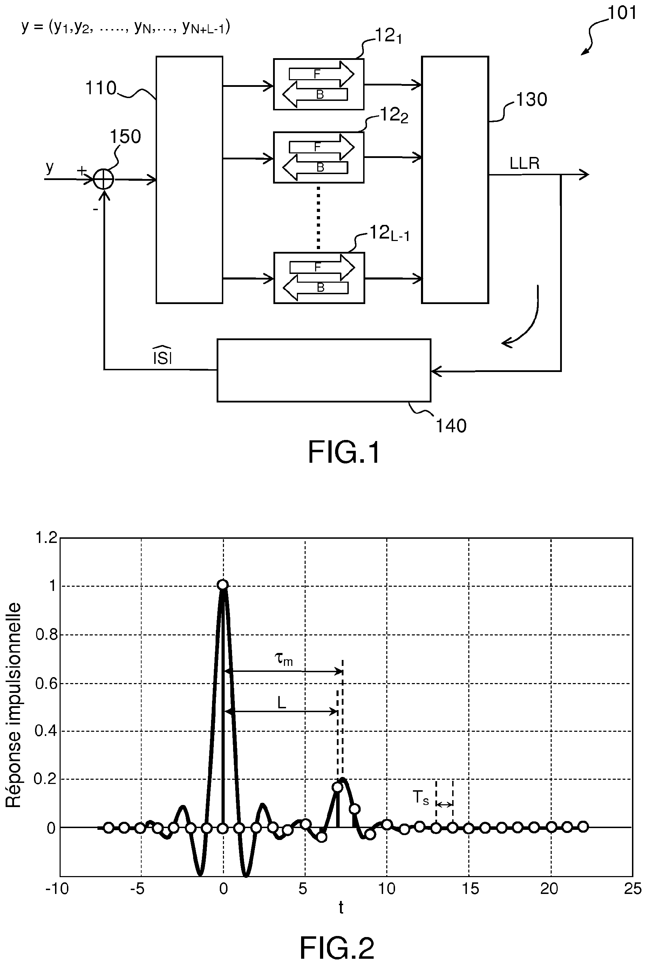

La figure 1 représente un synoptique d'un égaliseur selon un premier mode de réalisation de l'invention.

L'invention est basée sur l'hypothèse que le canal de transmission entre l'émetteur et le récepteur peut être modélisé par deux trajets de forte puissance distants d'une durée équivalente à un nombre L de symboles modulés. Les autres trajets sont considérés comme ayant une puissance faible vis-à-vis des deux trajets prépondérants.

Ce modèle est notamment, mais pas uniquement, adapté à la représentation d'un canal de propagation aéronautique reliant un satellite à un aéronef. Dans ce scénario, le trajet de puissance la plus importante correspond au trajet direct entre le satellite et l'aéronef tandis que le second trajet, de puissance importante mais plus faible que le trajet principal, correspond à la réflexion du signal sur la surface de la terre.

La figure 2 représente, sur un diagramme temporel, un exemple d'allure de la réponse impulsionnelle d'un canal de transmission à deux trajets principaux. Les deux trajets sont espacés d'une durée temporelle $\delta_m$ équivalente à un nombre L de symboles, un symbole ayant une durée Ts.

La relation (1) représente une séquence de N symboles reçus $y_i$ en fonction des N symboles émis $x_i$ et des paramètres du canal. $L_{canal}$ est la longueur totale de la réponse impulsionnelle du canal.

$$(y_1\, y_2 \ldots y_{N-1} y_N) = conv([x_1\, x_2 \ldots x_{N-1} x_N], [h_1, h_2, \ldots h_{L-1}, h_L, \ldots h_{Lcanal}]) + B$$

$$(1)$$

On voit qu'une séquence de symboles reçus peut s'écrire comme la somme de deux termes.

Le premier terme est le produit de convolution entre la séquence de symboles émis avec la réponse impulsionnelle du canal de longueur $L_{canal}$. Le second terme B représente le bruit thermique ajouté au signal en réception.

Traditionnellement, l'égalisation des symboles reçus peut être effectuée par un égaliseur MAP de l'acronyme Maximum A Posteriori qui vise à calculer, pour chaque symbole de la séquence reçue, la probabilité a posteriori du symbole associé sachant la séquence de symboles reçus.

Ce type d'algorithme d'égalisation est basé sur l'utilisation d'un treillis dont les états correspondent à la mémoire du canal, autrement dit aux $L_{canal}-1$ derniers symboles reçus. Le nombre d'états du treillis est donc égal à $M^{L_{canal}-1}$ où M est l'ordre de la modulation. Il apparait donc clairement qu'un inconvénient réside dans la complexité de mise en oeuvre d'un tel algorithme lorsque la longueur du canal estimé $L_{canal}$ est importante.

Afin de proposer une solution à ce problème, l'invention propose une représentation différente du signal reçu qui est donnée par la relation (2).

$$(y_1\, y_2\, \ldots \, y_{N-1} y_N) = conv([x_1\, x_2\, \ldots .\, x_{N-1} x_N], [h_1, 0, \ldots 0, h_L, 0 \ldots 0]) + ISI + B\ (2)$$

Le signal reçu est cette fois décomposé en une somme de trois termes.

Le premier terme est le produit de convolution entre la séquence de symboles émis avec la réponse impulsionnelle du canal dans laquelle seuls les deux trajets d'amplitude $h_1$, $h_L$ les plus élevées sont retenues tandis que les autres trajets sont forcés à 0. La réponse du canal est ainsi représentée par le vecteur $[h_1, 0, \ldots 0, h_L, 0 \ldots 0]$ de longueur $L_{canal}$·

Le deuxième terme ISI représente un terme d'interférence entre symboles résultant de la convolution des symboles émis avec la réponse impulsionnelle du canal comprenant cette fois uniquement les trajets de faible amplitude tandis que les deux trajets de plus fortes amplitudes sont mis à zéro. Ce deuxième terme peut s'écrire sous la forme

$$ISI = \ conv([x_1\, x_2\, \ldots .\, x_{N-1} x_N], [0, h_2, \ldots h_{L-1}, 0, h_{L+1}, \ldots h_{Lcanal}])$$

Enfin, le troisième terme B représente le bruit thermique ajouté au signal en réception.

En utilisant la représentation donnée par la relation (2), on voit que le premier terme correspond au signal impacté par l'interférence générée par un canal parcimonieux à deux trajets uniques. Un tel canal peut être ramené, de manière équivalente, à plusieurs canaux indépendants comprenant deux trajets successifs. Précisément, en démultiplexant le signal reçu sur L voies de réception parallèles, chacune sous-échantillonnée d'un facteur L, le signal sur chacune de ces voies est impacté par un canal de longueur égale à deux, autrement dit un canal à deux trajets successifs. L'égalisation de chacune de ses voies sous-échantillonnées par un égaliseur MAP est alors moins complexe à mettre en oeuvre puisque la mémoire de l'égaliseur n'est plus égale à $L_{canal}$ mais égale à deux.

Le deuxième terme ISI d'interférence liée aux trajets d'amplitude secondaire du canal est considéré comme influant peu sur les décisions de la structure d'égalisation parallélisée sur L voies. Ainsi, l'invention propose de supprimer l'interférence liée à ce deuxième terme en la re-générant en sortie du bloc d'égalisation puis en la retranchant au signal reçu et en itérant le processus.

La figure 1 représente ainsi la structure globale de l'égaliseur proposé selon l'invention. L'égaliseur selon l'invention est représenté sous la forme d'un schéma bloc correspondant à des modules implémentés par un dispositif global. Chaque module peut indifféremment également être compris comme étant une étape du procédé d'égalisation selon l'invention.

Le dispositif 101 comprend ainsi un démultiplexeur 110 d'un facteur L égal à la distance, en nombre de symboles, entre les deux trajets de plus fortes amplitudes dans la réponse impulsionnelle du canal. Le démultiplexeur 110 reçoit un bloc de N symboles reçus et produit en sortie L voies parallèles comprenant les mêmes symboles répartis en L sous-blocs sous-échantillonnés.

Sur chaque voie de démultiplexage, un égaliseur $12_1, 12_2, \ldots 12_{L-1}$, de type égaliseur MAP est appliqué.

Sans sortir du cadre de l'invention, l'égaliseur de type MAP peut être remplacé par un égaliseur linéaire, par exemple un égaliseur de type DFE (Décision Feedback Equalizer) ou MMSE (Minimum Mean Square Error) ou ZF (Zéro Forcing).

Dans la suite du texte, on décrit l'invention dans le cadre d'une application utilisant un égaliseur de type MAP.

Un multiplexeur 130 reconstruit un bloc de N symboles égalisés à partir des sorties des L égaliseurs. Les symboles égalisés peuvent être des symboles de valeurs souples ou LLR (log likelihood ratio) ou des valeurs binaires.

Un générateur d'interférences 140 prend en entrée le bloc de symboles égalisés et produit en sortie une estimée du deuxième terme ISI de la relation (2). Pour cela, le générateur d'interférences 140 effectue une opération de convolution entre la séquence de symboles égalisés et la réponse impulsionnelle du canal dans laquelle les coefficients correspondant aux deux trajets de plus fortes puissances sont mis à zéro.

# EP 3 054 638 B1

$$\widehat{ISI} = conv([\hat{x}_1 \widehat{x_2} \dots \hat{x}_{N-1} \hat{x}_N], [0, h_2, \dots h_{L-1}, 0, h_{L+1}, \dots h_{Lcanal}])$$

Les coefficients de la réponse impulsionnelle du canal peuvent être obtenus à l'aide d'un algorithme d'estimation de canal dont l'Homme du métier connait au moins une mise en oeuvre parmi les techniques connues de l'art antérieur. Une telle méthode n'est pas développée ici.

Le terme d'interférence est ensuite retranché 150 aux symboles reçus afin d'opérer une seconde itération des traitements décrits ci-dessus.

Plusieurs itérations successives peuvent être réalisées afin de converger vers une séquence de symboles optimale, pour le modèle de canaux à deux trajets, dans laquelle l'interférence liée au deuxième terme ISI est supprimée totalement.

Un avantage de la structure de l'égaliseur 101 selon l'invention est qu'elle permet un fort niveau de parallélisation puisque sur chaque voie de sortie du démultiplexeur 110, L égaliseurs identiques peuvent être exécutés simultanément en parallèle car aucune interdépendance n'existe entre ces égaliseurs.

Un égaliseur MAP est basé sur la recherche, pour une séquence de symboles reçus, de la séquence émise correspondant aux symboles ayant la plus grande probabilité a posteriori. Pour déterminer cette séquence, l'égaliseur MAP utilise un algorithme « forward-backward » ou progressif-rétroprogressif en français qui se base sur un treillis dont les états correspondent à la mémoire du canal, autrement dit aux $L_{canal}$-1 derniers symboles reçus et chaque branche entre deux états du treillis correspond à un nouveau symbole reçu. Le treillis implémenté possède un nombre N de sections égal au nombre N de symboles par bloc traité en entrée de l'égaliseur selon l'invention.

L'algorithme « forward-backward » implémente un parcours du treillis en deux étapes. Une première étape consiste à parcourir le treillis dans le sens progressif (forward) et à calculer au fur et à mesure du parcours, pour chaque état du treillis, une première probabilité d'être dans un état donné connaissant toutes les observations jusqu'à la section de treillis précédente Une observation désigne un symbole reçu.

Une seconde étape consiste à parcourir le treillis dans le sens rétroprogressif (backward) et à calculer, pour chaque état du treillis, une seconde probabilité d'obtenir la séquence d'observations dans les sections suivantes du treillis sachant l'état considéré.

Cet algorithme est bien connu de l'Homme du métier, spécialiste en traitement de signal appliqué à l'égalisation de canal, et n'est pas décrit en détail ici. Le lecteur peut, par exemple, se référer à l'article [9]. ».

Ce qui est important pour la compréhension de l'invention est que l'algorithme d'égalisation MAP comprend usuellement une première étape de parcours du treillis dans le sens progressif et une seconde étape de parcours du treillis dans le sens rétroprogressif.

En outre, le démultiplexage du signal reçu sur L voies parallèles sous-échantillonnées permet de se ramener, sur chaque voie, à un signal équivalent impacté par un canal de transmission dont la mémoire vaut 1 et non plus $L_{canal}$-1.

Ce constat permet de simplifier la mise en oeuvre de l'algorithme d'égalisation MAP. En effet, le nombre d'états du treillis est égal à $M^{L_{canal}-1}$ où M est l'ordre de la modulation. En se ramenant à un canal de mémoire égal à 1 sur chaque voie d'égalisation, il est possible d'appliquer un égaliseur utilisant un treillis comprenant seulement M états ($L_{canal}$=2). Cette simplification permet un gain sur la complexité d'implémentation.

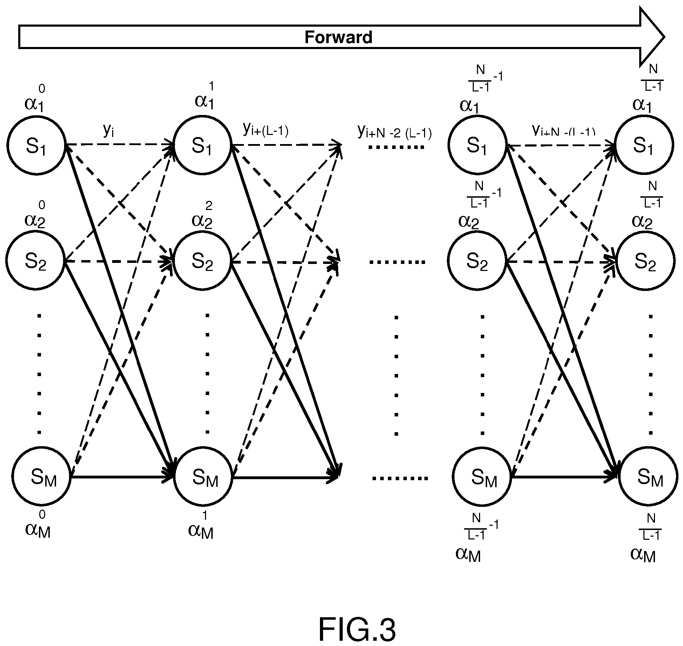

La figure 3 illustre un exemple de parcours d'un treillis dans le sens progressif qui correspond à l'étape « forward » de l'algorithme « forward-backward ». Pour chaque section du treillis, et pour chaque état d'une section, une première probabilité $\alpha_j^k$ d'être dans un état donné connaissant les observations passées est calculée.

A titre d'exemple non limitatif, cette probabilité $\alpha_j^k$ peut être calculée à l'aide de l'algorithme suivant. Toute variante connue d'implémentation de cet algorithme peut également être envisagée en restant dans les limites des connaissances générales de l'Homme du métier. Les premières valeurs des probabilités sont initialisées $\alpha_1^0 = 1$ $\alpha_{j\neq1}^0 = 0$. Les valeurs suivantes sont calculées itérativement par l'algorithme suivant

$$Pour \ \ k \ variant \ de \ 1 \ à \ \frac{N}{L-1}$$

```
Pour  j de 1 à M
```

$$\alpha_j^k = \sum_j \gamma^i(S',S)\ \alpha_j^{k-1}$$

```
        Fin

    fin
```

N est le nombre de symboles du bloc de symboles reçu sur lequel est appliqué l'égaliseur.

$\gamma^k(S',S) = p(S,y_k/S') = p(S/S')\ p(y_k/S,S') = p(s_k = S)\ p(y_k/S,S')$ où S' est un état courant et S un état futur, yk étant un symbole reçu.

$p(s_k = S)$ est une probabilité déterminée à partir de l'apriori des bits correspondants au symbole $s_k$.

$p(y_k/S,S')$ peut être déterminée à l'aide de la relation suivante :

$$p(y_k/S,S') = \frac{1}{\sigma\sqrt{2\pi}}\ e^{\frac{|y_k - \widehat{ISI} - (\hat{h}_2 S' + \hat{h}_1 S)|^2}{2\sigma^2}}$$

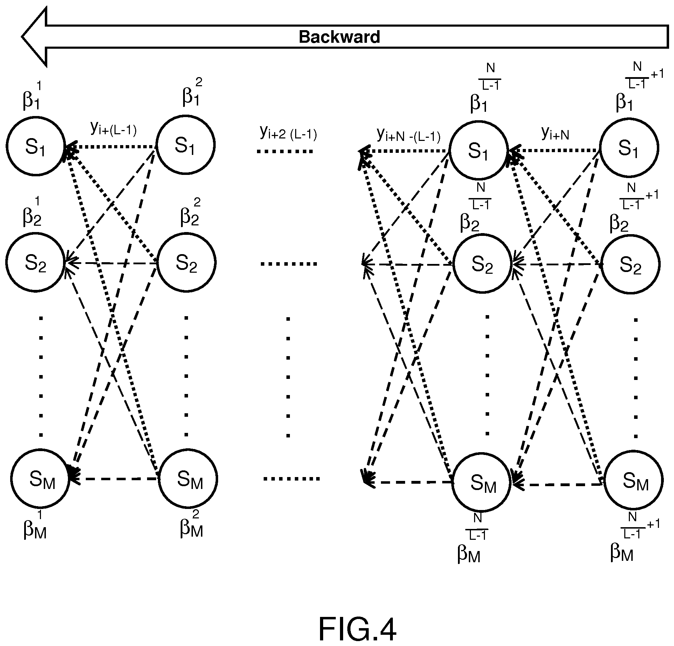

La figure 4 décrit un exemple de parcours d'un treillis selon le sens rétroprogressif qui correspond à l'étape « backward » de l'algorithme « forward-backward ». Pour chaque section du treillis, et pour chaque état d'une section, une seconde probabilité $\beta_j^k$ est calculée d'obtenir la séquence de symboles reçus dans le futur sachant l'état courant.

Un exemple d'algorithme permettant de calculer les secondes probabilités $\beta_j^k$ est donné ci-dessous.

Les premières valeurs des probabilités $\beta_1^{\frac{N}{L-1}+1}$ et $\beta_{j\neq 1}^{\frac{N}{L-1}+1}$ sont initialisées à des valeurs dépendant de la stratégie d'implémentation de fermeture du treillis.

Les valeurs suivantes sont calculées itérativement par l'algorithme suivant

```
Pour  k variant de  N/(L-1)  à  1
```

```
        Pour  j de 1 à M
```

$$\beta_j^k = \sum_j \gamma^i(S',S)\ \beta_j^{k+1}$$

```
            fin

        fin
```

La probabilité d'être dans un état donné à un instant donné peut s'écrire à l'aide de la relation suivante :

$$p(S,y) = \sum_{S'} p(S',S,y) = \sum_{S'}\ \alpha^{k-1}(S')\ \gamma^k(S',S)\ \beta^k(S).$$

Mais pour un canal de mémoire de longueur égale à 1, cette relation se simplifie pour arriver à la relation finale suivante :

$$p\left(s_k = S_j, y\right) = \quad \alpha_j^k \quad \beta_j^k \qquad \begin{array}{l} j \in [1 \dots M] \\ k \in [1 \dots N] \end{array} \qquad (3)$$

Pour obtenir la séquence finale de symboles égalisés on recherche dans l'ensemble du treillis la séquence de probabilités $p(s_k = S_j, y)$ maximales. Les symboles égalisés retenus sont ceux qui correspondent aux probabilités maximales pour chaque section du treillis. En opérant ainsi, on minimise le taux d'erreurs symbole sur le bloc de symboles égalisés. Dans une variante de réalisation du premier mode de l'invention décrit à la figure 1, il est possible de limiter encore la complexité d'implémentation en simplifiant l'algorithme MAP en exécutant uniquement l'étape « forward ».

Dans ce cas la relation (3) est modifiée en (4)

$$p\left(s_k = S_j, y\right) = \quad \alpha_j^k \qquad \begin{array}{l} j \in [1 \dots M] \\ k \in [1 \dots N] \end{array} \qquad (4)$$

Selon cette variante, les égaliseurs $12_1, 12_2, \dots 12_{L\text{-}1}$ implémentent uniquement une étape « forward » et non plus une étape « forward » suivie d'une étape « backward ».

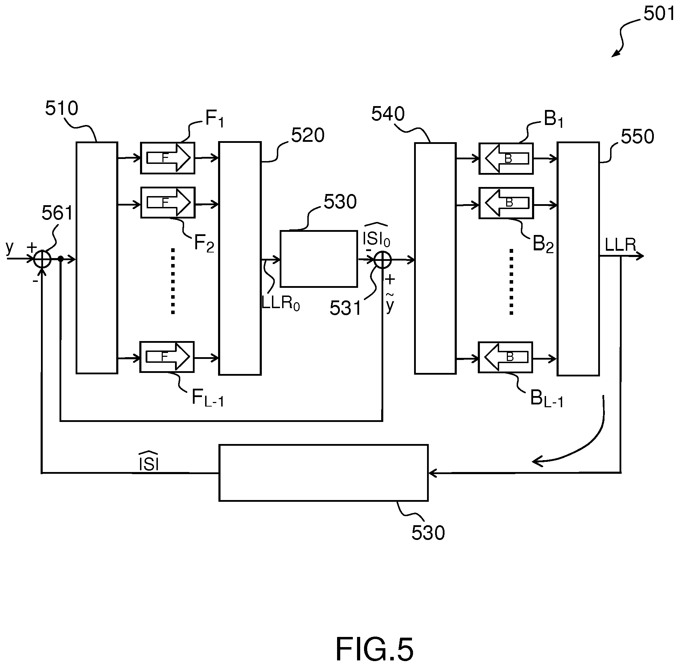

La figure 5 schématise un second mode de réalisation d'un dispositif d'égalisation 501 selon l'invention.

Dans ce second mode, on introduit une étape supplémentaire de suppression d'interférence 530 entre l'étape « forward » de l'égalisation et l'étape « backward ».

Le dispositif 501 comprend un premier démultiplexeur 510 identique au démultiplexeur 110 du dispositif de la figure 1 qui produit en sortie L voies parallèles comprenant les mêmes symboles répartis en L sous-blocs sous-échantillonnés.

Sur chaque voie de démultiplexage, un premier égaliseur $F_1, F_2, \dots F_{L\text{-}1}$ de type égaliseur MAP est appliqué mais en implémentant uniquement l'étape de parcours du treillis dans le sens progressif ou étape « forward ».

Un premier multiplexeur 520, identique au multiplexeur 130 de la figure 1, reconstruit un bloc de N symboles égalisés à partir des sorties des L premiers égaliseurs $F_1, F_2, \dots F_{L\text{-}1}$. Les symboles égalisés peuvent être des symboles de valeurs souples ou LLR (log likelihood ratio) ou des valeurs décidées.

Un premier générateur d'interférences 530, identique au générateur 140 de la figure 1, prend en entrée le bloc de symboles égalisés et produit en sortie une estimée du terme d'interférence ISI. Ce terme d'interférence est retranché 531 aux symboles reçus pour produire des symboles égalisés et corrigés de l'interférence entre symboles résiduelles liées aux trajets secondaires du canal de propagation.

Les symboles obtenus sont ensuite produits en entrée d'un second module comprenant un second démultiplexeur 540, identique au premier démultiplexeur 510, L seconds égaliseurs $B_1, B_2, \dots B_{L\text{-}1}$ et un second multiplexeur 550, identique au premier multiplexeur 520. Les seconds égaliseurs $B_1, B_2, \dots B_{L\text{-}1}$ n'implémentent que l'étape de parcours du treillis dans le sens rétroprogressif ou étape « backward ».

Les symboles obtenus en sortie du multiplexeur 550 peuvent être utilisés comme symboles égalisés finaux. Dans ce cas, à l'inverse du système de la figure 1, le second mode de réalisation de l'invention ne nécessite pas d'itérations car l'interférence résiduelle est gérée entre les étapes « forward » et les étapes « backward ». Un avantage de cette implémentation est qu'elle diminue le nombre de traitements a effectué et donc la latence globale de l'opération d'égalisation.

Selon une variante du second mode de réalisation de l'invention, le dispositif 501 comporte en outre un second générateur d'interférences 560 qui opère de façon identique au générateur d'interférences 140 de la figure 1 et vient corriger 561 l'interférence résiduelle des symboles d'entrée du dispositif 501.

Le système selon cette variante peut être itéré sur plusieurs itérations. Il peut aussi être interrompu dès la première demi-itération, autrement dit lors de la première itération, le procédé peut s'interrompre sans exécuter les étapes d'égalisation $B_1, B_2, \dots B_{L\text{-}1}$ « backward ». Dans ce cas, les symboles corrigés de l'interférence résiduelle générée par le générateur 530 sont conservés comme étant les symboles égalisés finaux.

Les schémas des figures 1 et 5 doivent être compris comme décrivant autant un dispositif d'égalisation composé de plusieurs modules (démultiplexeur, multiplexeur, égaliseurs, générateur d'interférence) qu'un procédé d'égalisation exécutant plusieurs étapes (démultiplexage, multiplexage, égalisation, génération d'interférence).

Le dispositif d'égalisation 101,501 selon l'invention peut comprendre, pour implémenter les démultiplexeurs 110,510,540, les multiplexeurs 130,520,550, les égaliseurs $12_1, 12_2, \dots 12_{L\text{-}1}, F_1, \dots F_{L\text{-}1}, B_1, \dots B_{L\text{-}1}$ et les générateurs d'interférence 140,530,560, des éléments matériels et/ou logiciels. Il peut notamment comprendre un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gâte Array »).

Le dispositif peut utiliser un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Le dispositif d'égalisation selon l'invention est destiné à être intégré dans un récepteur de signal transmis par voie radio.

Le procédé d'égalisation selon l'invention peut être mis en oeuvre en tant que programme d'ordinateur comportant des instructions pour son exécution. Le programme d'ordinateur peut être enregistré sur un support d'enregistrement lisible par un processeur. Le support peut être électronique, magnétique, optique ou électromagnétique.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués ("*Cloud computing*")*,* éventuellement avec selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

## Références

[1] N. Benvenuto and R. Marchesani, "The viterbi algorithm for sparse channels," Communications, IEEE Transactions on, vol. 44, no. 3, pp.287-289, Mar 1996.

[2] N. McGinty, R. Kennedy, and P. Hocher, "Parallel trellis viterbi algorithm for sparse channels," Communications Letters, IEEE, vol. 2, no. 5, pp. 143-145, May 1998.

[3] F. H. Lee and P. Mclane, "Parallel-Trellis Turbo Equalizers for Sparse Coded ransmission over SISO and MIMO Sparse Multipath Channels," IEEE Transactions on Wireless Communications, vol. 5, no. 12, pp. 3568-3578, Dec. 2006.

[4] J. Mietzner, S. Badri-Hoeher, I. Land, and P. a. Hoeher, "Equalization of Sparse Intersymbol-Interference Channels Revisited," EURASIP Journal on Wireless Communications and Networking, vol. 2006, pp. 1-13, 2006.

[5] J. Mietzner, S. Badri-Hoeher, I. Land, and P. Hoeher, "Trellis-based equalization for sparse ISI channels revisited," Proceedings. International Symposium on Information Theory, 2005. ISIT 2005., pp. 229- 233, 2005.

[6] F. Lee and P. McLane, "Iterative parallel-trellis MAP equalizers with nonuniformly-spaced prefilters for sparse multipath channels," Proceedings IEEE 56th Vehicular Technology Conférence, vol. 4, pp. 2201- 2205, 2002.

[7] J. Park and S. Gelfand, "Turbo equalizations for sparse channels," In Wireless Communications and Networking Conférence, 2004. WCNC. 2004 IEEE, vol. 4, March 2004, pp. 2301-2306 Vol.4.

[8] -, "Sparse map equalizers for turbo equalizations," in Vehicular Technology Conférence, 2005. VTC 2005-Spring. 2005 IEEE 61st, vol. 2, May 2005, pp. 762-766 Vol. 2.

[9] « L.Bahl, J.Cocke, F.Jelinek, and J.Raviv, "Optimal Decoding of Linear Codes for minimizing symbol error rate", IEEE Transactions on Information Theory, vol. IT-20(2), pp.284-287, March 1974.

## Revendications

1. Méthode d'égalisation d'un signal comprenant une pluralité de symboles modulés, ledit signal étant transmis par un émetteur à travers un canal de transmission vers un récepteur, ladite méthode comprenant les étapes suivantes appliquées à un bloc de N symboles reçus :

   - Une première étape d'égalisation dudit bloc comprenant :

      i. Le démultiplexage (110) des N symboles reçus d'un facteur L de sorte à générer un nombre L prédéterminé de sous-blocs de symboles comportant chacun une version sous-échantillonnée d'un facteur L dudit bloc de N symboles reçus,

ii. L'égalisation indépendante ($12_1, 12_2, ... 12_L$) de chaque sous-bloc à l'aide d'un algorithme d'égalisation identique,

iii. Le multiplexage (130) des symboles égalisés de chaque sous-bloc pour obtenir un bloc de N symboles égalisés,

- Une étape de suppression d'interférences liées aux trajets autres que les deux trajets de plus forte puissance comprenant :

i. La génération (140) d'un terme d'interférence résultant de l'influence, sur lesdits symboles égalisés, de tous les trajets du canal de la réponse impulsionnelle du canal de transmission sauf les deux trajets de plus forte puissance,

ii. La soustraction (150) dudit terme d'interférence aux symboles du bloc de N symboles reçus,

- Une seconde étape d'égalisation égale à une seconde itération de la première étape d'égalisation.

2. Méthode d'égalisation d'un signal selon la revendication 1 dans laquelle l'étape de suppression d'interférences et la seconde étape d'égalisation sont exécutées itérativement.

3. Méthode d'égalisation d'un signal selon l'une des revendications précédentes dans laquelle ledit algorithme d'égalisation est configuré pour opérer sur un treillis, chaque état du treillis représentant un symbole possible, chaque branche entre deux états consécutifs du treillis étant associée à un symbole modulé reçu.

4. Méthode d'égalisation d'un signal selon la revendication 3 dans laquelle ledit algorithme d'égalisation opérant sur un treillis comprend une première étape de parcours du treillis dans le sens progressif dans laquelle sont calculées, pour chaque section du treillis et pour chaque état courant de la section, une première probabilité d'occurrence dudit état connaissant les symboles possibles associés aux états antérieurs jusqu'à la section précédant l'état courant, un bloc de symboles égalisés étant déterminé comme la séquence d'états dans le treillis qui permet de maximiser lesdites premières probabilités.

5. Méthode d'égalisation d'un signal selon la revendication 4 dans laquelle ledit algorithme d'égalisation opérant sur un treillis comprend une seconde étape de parcours du treillis dans le sens rétroprogressif dans laquelle sont calculées, pour chaque section du treillis et pour chaque état courant de la section, une seconde probabilité d'occurrence d'une séquence de symboles possibles associés aux sections suivantes de ladite section sachant l'état courant, un bloc de symboles égalisés étant déterminé comme la séquence d'états dans le treillis qui permet de maximiser les produits entre ladite première probabilité et ladite seconde probabilité.

6. Méthode d'égalisation d'un signal comprenant une pluralité de symboles modulés, ledit signal étant transmis par un émetteur à travers un canal de transmission vers un récepteur, ladite méthode comprenant les étapes suivantes appliquées à un bloc de N symboles reçus :

- Une première étape d'égalisation dudit bloc comprenant :

i. Le démultiplexage (510) des N symboles reçus d'un facteur L de sorte à générer un nombre L prédéterminé de sous-blocs de symboles comportant chacun une version sous-échantillonnée d'un facteur L dudit bloc de N symboles reçus,

ii. L'égalisation indépendante ($F_1, F_2, ... F_{L-1}$) de chaque sous-bloc à l'aide d'un algorithme d'égalisation opérant sur un treillis, chaque état du treillis représentant un symbole possible, chaque branche entre deux états consécutifs du treillis étant associée à un symbole modulé reçu, ledit algorithme d'égalisation comprenant une étape de parcours du treillis dans le sens progressif dans laquelle sont calculées, pour chaque section du treillis et pour chaque état courant de la section, une première probabilité d'occurrence dudit état connaissant les symboles possibles associés aux états antérieurs jusqu'à la section précédant l'état courant, un bloc de symboles égalisés étant déterminé comme la séquence d'états dans le treillis qui permet de maximiser lesdites premières probabilités.

iii. Le multiplexage (520) des symboles égalisés de chaque sous-bloc pour obtenir un bloc de N symboles égalisés,

- Une étape de suppression d'interférences liées aux trajets autres que les deux trajets de plus forte puissance comprenant :

    i. La génération (530) d'un terme d'interférence résultant de l'influence, sur lesdits symboles égalisés, de tous les trajets du canal de la réponse impulsionnelle du canal de transmission sauf les deux trajets de plus forte puissance,
    ii. La soustraction (531) dudit terme d'interférence aux symboles du bloc de N symboles reçus,

- Une seconde étape d'égalisation comprenant :

    i. Le démultiplexage (540) du bloc de N symboles d'un facteur L de sorte à générer un nombre L prédéterminé de sous-blocs de symboles comportant chacun une version sous-échantillonnée d'un facteur L dudit bloc,
    ii. L'égalisation indépendante $(B_1, B_2, ... B_{L-1})$ de chaque sous-bloc à l'aide d'un algorithme d'égalisation opérant sur un treillis, chaque état du treillis représentant un symbole possible, chaque branche entre deux états consécutifs du treillis étant associée à un symbole modulé reçu, ledit algorithme d'égalisation comprenant une étape de parcours du treillis dans le sens rétroprogressif dans laquelle sont calculées, pour chaque section du treillis et pour chaque état courant de la section, une seconde probabilité d'occurrence d'une séquence de symboles possibles associés aux sections suivantes de ladite section sachant l'état courant, un bloc de symboles égalisés étant déterminé comme la séquence d'états dans le treillis qui permet de maximiser les produits entre ladite première probabilité et ladite seconde probabilité.
    iii. Le multiplexage (550) des symboles égalisés de chaque sous-bloc pour obtenir un bloc de N symboles égalisés.

7. Méthode d'égalisation d'un signal selon la revendication 6 comprenant en outre au moins une itération de l'exécution successive de l'étape de suppression d'interférences et de la première étape d'égalisation.

8. Méthode d'égalisation d'un signal selon la revendication 6 comprenant en outre au moins une itération de l'exécution successive d'une première occurrence de l'étape de suppression d'interférences, de la première étape d'égalisation, d'une seconde occurrence de l'étape de suppression d'interférences et de la seconde étape d'égalisation.

9. Méthode d'égalisation d'un signal selon l'une des revendications 3 à 8 dans laquelle ledit algorithme d'égalisation est un algorithme MAP, par exemple un algorithme BCJR (Bahl, Cocke, Jelinek, Raviv).

10. Méthode d'égalisation d'un signal selon l'une des revendications précédentes dans laquelle le facteur L de démultiplexage est égal à la durée, exprimée en nombre entier de symboles, entre les deux trajets de plus forte puissance dans la réponse impulsionnelle du canal de transmission.

11. Méthode d'égalisation d'un signal selon l'une des revendications précédentes dans laquelle la génération du terme d'interférence est réalisée par la convolution du bloc de N symboles égalisés avec une estimée de la réponse impulsionnelle du canal de transmission dans laquelle les coefficients correspondants aux deux trajets de plus forte puissance sont mis à zéro.

12. Programme d'ordinateur comportant des instructions pour l'exécution de la méthode d'égalisation d'un signal reçu selon l'une des revendications 1 à 11, lorsque le programme est exécuté par un processeur.

13. Support d'enregistrement lisible par un processeur sur lequel est enregistré un programme comportant des instructions pour l'exécution de la méthode d'égalisation d'un signal reçu selon l'une des revendications 1 à 11, lorsque le programme est exécuté par un processeur.

14. Dispositif d'égalisation d'un signal reçu comprenant des moyens configurés pour exécuter la méthode d'égalisation d'un signal reçu selon l'une des revendications 1 à 11.

15. Récepteur de signal comprenant un dispositif d'égalisation du signal reçu selon la revendication 14.

**Patentansprüche**

1. Verfahren zur Entzerrung eines Signals, das eine Vielzahl modulierter Zeichen umfasst, wobei das Signal von einem Sender durch einen Übertragungskanal zu einem Empfänger übertragen wird, wobei das Verfahren die folgenden Schritte umfasst, die auf einen Block von N empfangenen Zeichen angewendet werden:

- ein erster Entzerrungsschritt des Blocks, umfassend:

i. das Demultiplexen (110) der empfangenen N Zeichen um einen Faktor L, um eine vorbestimmte Anzahl L von Zeichenteilblöcken zu erzeugen, die jeder eine um einen Faktor L teilabgetastete Fassung des empfangenen Blocks mit N Zeichen aufweisen,
ii. die unabhängige Entzerrung ($12_1$, $12_2$, ...$12_L$) jedes Teilblocks mit Hilfe eines identischen Entzerrungsalgorithmus,
iii. das Multiplexen (130) der entzerrten Zeichen jedes Teilblocks, um einen Block mit N entzerrten Zeichen zu erhalten,

- einen Löschschritt von Störungen, die mit anderen Wegen als den zwei Wegen höchster Leistung verknüpft sind, umfassend:

i. die Erzeugung (140) eines Störungsglieds, das sich aus der Wirkung auf die entzerrten Zeichen aller Wege des Impulsantwortkanals des Übertragungskanals außer den zwei Wegen höchster Leistung ergibt,
ii. die Subtraktion (150) des Störungsglieds von den Zeichen des Blocks mit N empfangenen Zeichen,

- einen zweiten Entzerrungsschritt gleich einer zweiten Iteration des ersten Entzerrungsschritts.

2. Verfahren zur Entzerrung eines Signals nach Anspruch 1, in dem der Löschschritt von Störungen und der zweite Entzerrungsschritt wiederholt ausgeführt werden.

3. Verfahren zur Entzerrung eines Signals nach einem der vorhergehenden Ansprüche, in dem der Entzerrungsalgorithmus konfiguriert ist, um auf einem Gitter zu arbeiten, wobei jeder Gitterzustand ein mögliches Zeichen darstellt, wobei jeder Zweig zwischen zwei aufeinanderfolgenden Gitterzuständen einem empfangenen modulierten Zeichen zugeordnet ist.

4. Verfahren zur Entzerrung eines Signals nach Anspruch 3, in dem der Entzerrungsalgorithmus, der auf einem Gitter arbeitet, einen ersten Gitterbewegungsschritt in dem fortschreitenden Sinn umfasst, in dem für jeden Gitterabschnitt und für jeden aktuellen Zustand des Abschnitts eine erste Wahrscheinlichkeit des Auftretens des Zustands berechnet wird, bei bekannten möglichen Zeichen, die den vorherigen Zuständen bis zum Abschnitt zugehörig sind, der dem aktuellen Zustand vorangeht, wobei ein Block entzerrter Zeichen als die Abfolge der Zustände in dem Gitter bestimmt wird, die erlaubt, die ersten Wahrscheinlichkeiten zu maximieren.

5. Verfahren zur Entzerrung eines Signals nach Anspruch 4, in dem der Entzerrungsalgorithmus, der auf einem Gitter arbeitet, einen zweiten Gitterbewegungsschritt in dem rückschreitenden Sinn umfasst, in dem für jeden Gitterabschnitt und für jeden aktuellen Zustand des Abschnitts eine zweite Wahrscheinlichkeit des Auftretens einer Abfolge von möglichen Zeichen berechnet wird, die den folgenden Abschnitten des Abschnitts zugehörig sind, bei bekanntem aktuellen Zustand, wobei ein Block entzerrter Zeichen als die Abfolge der Zustände in dem Gitter bestimmt wird, die erlaubt, die Ergebnisse zwischen der ersten Wahrscheinlichkeit und der zweiten Wahrscheinlichkeit zu maximieren.

6. Verfahren zur Entzerrung eines Signals, das eine Vielzahl modulierter Zeichen umfasst, wobei das Signal von einem Sender durch einen Übertragungskanal zu einem Empfänger übertragen wird, wobei das Verfahren die folgenden Schritte umfasst, die auf einen Block von N empfangenen Zeichen angewendet werden:

- ein erster Entzerrungsschritt des Blocks, umfassend:

i. das Demultiplexen (510) der empfangenen N Zeichen um einen Faktor L, um eine vorbestimmte Anzahl L von Zeichenteilblöcken zu erzeugen, die jeder eine um einen Faktor L teilabgetastete Fassung des empfangenen Blocks mit N Zeichen aufweisen,
ii. die unabhängige Entzerrung ($F_1$, $F_2$, ...$F_{L-1}$) jedes Teilblocks mit Hilfe eines Entzerrungsalgorithmus, der auf einem Gitter arbeitet, wobei jeder Gitterzustand ein mögliches Zeichen darstellt, wobei jeder Zweig zwischen zwei aufeinanderfolgenden Gitterzuständen einem empfangenen modulierten Zeichen zugehörig ist, wobei der Entzerrungsalgorithmus einen Gitterbewegungsschritt in dem fortschreitenden Sinn umfasst, in dem für jeden Gitterabschnitt und für jeden aktuellen Zustand des Abschnitts eine erste Wahrscheinlichkeit des Auftretens des Zustands berechnet wird, bei bekannten möglichen Zeichen, die den vorherigen Zuständen bis zum vorangehenden Abschnitt des aktuellen Zustands zugehörig sind, wobei ein Block entzerrter Zeichen als die Abfolge der Zustände in dem Gitter bestimmt wird, die erlaubt, die ersten Wahrscheinlichkeiten zu maximieren.

iii. das Multiplexen (520) der entzerrten Zeichen jedes Teilblocks, um einen Block mit N entzerrten Zeichen zu erhalten,

- einen Schritt der Löschung von Störungen, die mit anderen Wegen als den zwei Wegen höchster Leistung verknüpft sind, umfassend:

i. die Erzeugung (530) eines Störungsglieds, das sich aus der Wirkung auf die entzerrten Zeichen aller Wege des Impulsantwortkanals des Übertragungskanals außer den zwei Wegen höchster Leistung ergibt,

ii. die Subtraktion (531) des Störungsglieds von den Zeichen des Blocks mit N empfangenen Zeichen,

- einen zweiten Entzerrungsschritt, der umfasst:

i. das Demultiplexen (540) des Blocks der N Zeichen um einen Faktor L, um eine vorbestimmte Anzahl L von Zeichenteilblöcken zu erzeugen, die jeder eine um einen Faktor L teilabgetastete Fassung des Blocks aufweisen,

ii. die unabhängige Entzerrung ($B_1$, $B_2$, ...$B_{L-1}$) jedes Teilblocks mit Hilfe eines Entzerrungsalgorithmus, der auf einem Gitter arbeitet, wobei jeder Gitterzustand ein mögliches Zeichen darstellt, wobei jeder Zweig zwischen zwei aufeinanderfolgenden Gitterzuständen einem empfangenen modulierten Zeichen zugehörig ist, wobei der Entzerrungsalgorithmus einen Gitterbewegungsschritt in dem rückschreitenden Sinn umfasst, in dem für jeden Gitterabschnitt und für jeden aktuellen Zustand des Abschnitts eine zweite Wahrscheinlichkeit des Auftretens einer Abfolge möglicher Zeichen berechnet wird, die den folgenden Abschnitten des Abschnitts zugehörig sind, bei bekanntem aktuellen Zustand, wobei ein Block entzerrter Zeichen als die Abfolge der Zustände in dem Gitter bestimmt wird, die erlaubt, die Ergebnisse zwischen der ersten Wahrscheinlichkeit und der zweiten Wahrscheinlichkeit zu maximieren,

iii. das Multiplexen (550) der entzerrten Zeichen jedes Teilblocks, um einen Block mit N entzerrten Zeichen zu erhalten.

7. Verfahren zur Entzerrung eines Signals nach Anspruch 6, das ferner mindestens eine Iteration der aufeinanderfolgenden Ausführung des Löschschritts von Störungen und des ersten Entzerrungsschritts umfasst.

8. Verfahren zur Entzerrung eines Signals nach Anspruch 6, das ferner mindestens eine Iteration der aufeinanderfolgenden Ausführung eines ersten Auftretens des Löschschritts von Störungen, des ersten Entzerrungsschritts, eines zweiten Auftretens des Löschschritts von Störungen und des zweiten Entzerrungsschritts umfasst.

9. Verfahren zur Entzerrung eines Signals nach einem der Ansprüche 3 bis 8, in dem der Entzerrungsalgorithmus ein MAP-Algorithmus, zum Beispiel ein BCJR-Algorithmus (Bahl, Cocke, Jelinek, Raviv) ist.

10. Verfahren zur Entzerrung eines Signals nach einem der vorhergehenden Ansprüche, in dem der Faktor L des Demultiplexens gleich der Dauer ist, die als ganze Zahl von Zeichen zwischen den beiden Wegen höchster Leistung in der Impulsantwort des Übertragungskanals ausgedrückt wird.

11. Verfahren zur Entzerrung eines Signals nach einem der vorhergehenden Ansprüche, in dem die Erzeugung des Störungsglieds durch die Faltung des Blocks von N entzerrten Zeichen mit einer Schätzung der Impulsantwort des Übertragungskanals erzeugt wird, in dem die Beiwerte, die den beiden Wegen höchster Leistung entsprechen, auf Null gesetzt sind.

12. Computerprogramm, das Befehle für die Ausführung des Verfahrens zur Entzerrung eines empfangenen Signals nach einem der Ansprüche 1 bis 11 aufweist, wenn das Programm durch einen Prozessor ausgeführt wird.

13. Aufzeichnungsmedium, das durch einen Prozessor lesbar ist, auf dem ein Programm aufgezeichnet ist, das Befehle für die Ausführung des Verfahrens zur Entzerrung eines empfangenen Signals nach einem der Ansprüche 1 bis 11 aufweist, wenn das Programm durch einen Prozessor ausgeführt wird.

**14.** Vorrichtung zur Entzerrung eines empfangenen Signals, die Mittel umfasst, die konfiguriert sind, um das Verfahren zur Entzerrung eines empfangenen Signals nach einem der Ansprüche 1 bis 11 auszuführen.

**15.** Signalempfänger, der eine Vorrichtung zur Entzerrung des empfangenen Signals nach Anspruch 14 umfasst.

**Claims**

**1.** A method for equalising a signal comprising a plurality of modulated symbols, said signal being transmitted by a sender, through a transmission channel, to a receiver, said method comprising the following steps applied to a block of N received symbols:

- a first step of equalising said block comprising:

i. demultiplexing (110) the N received symbols by a factor L so as to generate a predetermined number L of sub-blocks of symbols each comprising a version of said block of N received symbols that is sub-sampled by a factor L;
ii. independently equalising ($12_1$, $12_2$,...$12_L$) each sub-block using an identical equalisation algorithm;
iii. multiplexing (130) the equalised symbols of each sub-block in order to obtain a block of N equalised symbols;

- a step of removing interference linked to paths other than the two highest power paths comprising:

i. generating (140) an interference term resulting from the influence, on said equalised symbols, of all the paths of the channel of the pulse response of the transmission channel, except the two highest power paths;
ii. subtracting (150) said interference term from the symbols of the block of N received symbols;

- a second equalising step equal to a second iteration of the first equalising step.

**2.** The method for equalising a signal as claimed in claim 1, wherein the step of removing interference and the second equalising step are executed iteratively.

**3.** The method for equalising a signal as claimed in any one of the preceding claims, wherein said equalisation algorithm is configured to operate on a lattice, each state of the lattice representing a possible symbol, each branch between two consecutive states of the lattice being associated with a received modulated symbol.

**4.** The method for equalising a signal as claimed in claim 3, wherein said equalisation algorithm operating on a lattice comprises a first step of traversing the lattice in the forward direction, in which step a first probability of occurrence of said state, knowing the possible symbols that are associated with the prior states up to the section preceding the current state, is computed for each section of the lattice and for each current state of the section, with a block of equalised symbols being determined as the sequence of states in the lattice which allows said first probabilities to be maximised.

**5.** The method for equalising a signal as claimed in claim 4, wherein said equalisation algorithm operating on a lattice comprises a second step of traversing the lattice in the backward direction, in which step a second probability of occurrence of a sequence of possible symbols that are associated with the sections that are subsequent to said section, knowing the current state, is computed for each section of the lattice and for each current state of the section, with a block of equalised symbols being determined as the sequence of states in the lattice that allows the products between said first probability and said second probability to be maximised.

**6.** The method for equalising a signal comprising a plurality of modulated symbols, said signal being transmitted by a sender, through a transmission channel, to a receiver, said method comprising the following steps applied to a block of N received symbols:

- a first step of equalising said block comprising:

i. demultiplexing (510) the N received symbols by a factor L so as to generate a predetermined number L of sub-blocks of symbols each comprising a version of said block of N received symbols that is sub-sampled by a factor L;

ii. independently equalising ($F_1$, $F_2$,...$F_{L-1}$) each sub-block using an equalisation algorithm operating on a lattice, each state of the lattice representing a possible symbol, each branch between two consecutive states of the lattice being associated with a received modulated symbol, said equalisation algorithm comprising a step of traversing the lattice in the forward direction, in which step a first probability of occurrence of said state, knowing the possible symbols that are associated with the prior states up to the section preceding the current state, is computed for each section of the lattice and for each current state of the section, with a block of equalised symbols being determined as the sequence of states in the lattice which allows said first probabilities to be maximised;

iii. multiplexing (520) the equalised symbols of each sub-block in order to obtain a block of N equalised symbols;

- a step of removing interference linked to paths other than the two highest power paths comprising:

i. generating (530) an interference term resulting from the influence, on said equalised symbols, of all the paths of the channel of the pulse response of the transmission channel, except the two highest power paths;

ii. subtracting (531) said interference term from the symbols of the block of N received symbols;

- a second equalising step comprising:

i. demultiplexing (540) the block of N symbols by a factor L so as to generate a predetermined number L of sub-blocks of symbols each comprising a version of said block that is sub-sampled by a factor L;

ii. independently equalising ($B_1$, $B_2$,...$B_{L-1}$) each sub-block using an equalisation algorithm operating on a lattice, each state of the lattice representing a possible symbol, each branch between two consecutive states of the lattice being associated with a received modulated symbol, said equalisation algorithm comprising a step of traversing the lattice in the backward direction, in which step a second probability of occurrence of a sequence of possible symbols that are associated with the sections that are subsequent to said section, knowing the current state, is computed for each section of the lattice and for each current state of the section, with a block of equalised symbols being determined as the sequence of states in the lattice that allows the products between said first probability and said second probability to be maximised;

iii. multiplexing (550) the equalised symbols of each sub-block in order to obtain a block of N equalised symbols.

7. The method for equalising a signal as claimed in claim 6, further comprising at least one iteration of the successive execution of the step of removing interference and of the first equalising step.

8. The method for equalising a signal as claimed in claim 6, further comprising at least one iteration of the successive execution of a first occurrence of the step of removing interference, of the first equalising step, of a second occurrence of the step of removing interference and of the second equalising step.

9. The method for equalising a signal as claimed in any one of claims 3 to 8, wherein said equalisation algorithm is a MAP algorithm, for example, a BCJR (Bahl, Cocke, Jelinek, Raviv) algorithm.

10. The method for equalising a signal as claimed in any one of the preceding claims, wherein the demultiplexing factor L is equal to the duration, expressed as a whole number of symbols, between the two highest power paths in the pulse response of the transmission channel.

11. The method for equalising a signal as claimed in any one of the preceding claims, wherein generating the interference term is carried out by convoluting the block of N equalised symbols with an estimate of the pulse response of the transmission channel, in which the coefficients corresponding to the two highest power paths are set to zero.

12. A computer program comprising instructions for executing the method for equalising a received signal as claimed in any one of claims 1 to 11, when the program is executed by a processor.

13. A storage medium that is readable by a processor, on which medium a program is recorded comprising instructions for executing the method for equalising a received signal as claimed in any one of claims 1 to 11, when the program is executed by a processor.

**14.** A device for equalising a received signal, comprising means configured to execute the method for equalising a received signal as claimed in any one of claims 1 to 11.

**15.** A signal receiver, comprising a device for equalising the received signal as claimed in claim 14.

$y = (y_1, y_2, \ldots, y_N, \ldots, y_{N+L-1})$

FIG.1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 6904085 B

**Littérature non-brevet citée dans la description**

• **FREDERICK K H LEE et al.** Parallel-Trellis turbo equalizers for sparse-coded transmission over SISO and MIMO sparse multipath channels. *IEEE transactions on wireless communications*
• **N. BENVENUTO ; R. MARCHESANI.** The viterbi algorithm for sparse channels. *Communications, IEEE Transactions on,* Mars 1996, vol. 44 (3), 287-289
• Parallel trellis viterbi algorithm for sparse channels. **N. MCGINTY ; R. KENNEDY ; P. HOCHER.** Communications Letters. IEEE, Mai 1998, vol. 2, 143-145
• **F. H. LEE ; P. MCLANE.** Parallel-Trellis Turbo Equalizers for Sparse Coded ransmission over SISO and MIMO Sparse Multipath Channels. *IEEE Transactions on Wireless Communications,* Décembre 2006, vol. 5 (12), 3568-3578
• **J. MIETZNER ; S. BADRI-HOEHER ; I. LAND ; P. A. HOEHER.** Equalization of Sparse Intersymbol-Interference Channels Revisited. *EURASIP Journal on Wireless Communications and Networking,* 2006, vol. 2006, 1-13

• **J. MIETZNER ; S. BADRI-HOEHER ; I. LAND ; P. HOEHER.** Trellis-based equalization for sparse ISI channels revisited. *Proceedings. International Symposium on Information Theory, 2005. ISIT,* 2005, 229-233
• **F. LEE ; P. MCLANE.** Iterative parallel-trellis MAP equalizers with nonuniformly-spaced prefilters for sparse multipath channels. *Proceedings IEEE 56th Vehicular Technology Conférence,* 2002, vol. 4, 2201-2205
• Turbo equalizations for sparse channels. **J. PARK ; S. GELFAND.** In Wireless Communications and Networking Conférence, 2004. WCNC. 2004. IEEE, Mars 2004, vol. 4, 2301-2306
• Sparse map equalizers for turbo equalizations. Vehicular Technology Conférence, 2005. VTC 2005-Spring. 2005. IEEE, Mai 2005, vol. 2, 762-766
• **L.BAHL, J.COCKE ; F.JELINEK ; J.RAVIV.** Optimal Decoding of Linear Codes for minimizing symbol error rate. *IEEE Transactions on Information Theory,* Mars 1974, vol. IT-20 (2), 284-287